# EUROPEAN PATENT SPECIFICATION

(11) **EP 4 415 434 B1**
(45) Date of publication and mention of the grant of the patent: **01.04.2026**
(21) Application number: 24155644.8
(22) Date of filing: 02.02.2024
(51) Int. Cl.: H04W 76/28, H04W 76/15

(54) **DRX IN ETHERNET BASED RADIOS**
DRX IN ETHERNETBASIERTE FUNKGERÄTE
DRX POUR RADIOS UTILISANT ETHERNET

(30) Priority: 10.02.2023 US 202363484344 P; 25.01.2024 US 202418423074
(43) Date of publication of application: 14.08.2024
(73) Proprietor: Analog Devices International Unlimited Company, Limerick (IE)
(72) Inventor: AL-OBAIDI, Rami Ali, Limerick (IE); GLONDYS, Robert, Limerick (IE)
(74) Representative: Yang, Shu

(56) References cited:
- US-A1- 2014 098 694
- US-A1- 2017 373 890
- SZIGETI TIM ET AL: "End-to-end QoS network design", 1 January 2005 (2005-01-01), pages 1 - 5, XP093178904, ISBN: 978-1-58705-176-0, Retrieved from the Internet <URL:https://www.amazon.com/End-End-QoS-Network-Design/dp/1587143690> [retrieved on 20240627]

## Description

This application claims the benefit of priority of U.S. Provisional Application No. 63/484,344, filed February 10, 2023, and of U.S. Non-Provisional Application No. 18/423,074, filed January 25, 2024.

### TECHNICAL FIELD

The present subject matter relates to a radio unit and access network for radio frequency communications and to a method of setting discontinuous receive states within a radio unit.

### BACKGROUND

### Field

The disclosed technology relates generally to radios and more particularly to discontinuous receive signals used by Ethernet based radios. US2017/373890 A1 discloses a distributed radio frequency communication system facilitates communication between a wireless terminal and a core network. The system includes a remote radio unit (RRU) coupled to at least one antenna to communicate with the wireless terminal. The RRU includes electronic circuitry to perform at least a first portion of a first-level protocol of a radio access network (RAN) for communicating between the wireless terminal and the core network. The system also includes a baseband unit (BBU) coupled to the core network, and configured to perform at least a second-level protocol of the RAN. A fronthaul link is coupled to the BBU and the RRU. The fronthaul link utilizes an adaptive fronthaul protocol for communication between the BBU and the RRU. The adaptive fronthaul protocol has provisions for adapting to conditions of the fronthaul link and radio network by changing the way data is communicated over the fronthaul link.

### Description of the Related Technology

Open radio access network (O-RAN) is a communication standard that can employ Ethernet for communications between an O-RAN radio unit (O-RU) and an O-RAN distributed unit (O-DU).

### SUMMARY OF SOME ASPECTS OF THE DISCLOSURE

The invention is defined in the independent claims. Additional features of the invention are provided in the dependent claims. In one aspect, a radio unit for radio frequency communications, comprising:
an input configured to receive a plurality of packets, at least one of the packets including control plane data; one or more receive paths configured to receive one or more radio frequency signals from one or more antennas; and an uplink allocation map component configured to receive the control plane data and determine a discontinuous receive state for each of the one or more receive paths based on the control plane data. The uplink allocation map component is further configured to set the discontinuous receive state in one of a first discontinuous receive state in which the corresponding receive path is to be turned off in response to absence of the control plane data or a second discontinuous receive state in which the corresponding receive path is to be turned on in response to the control plane data indicating that there are radio frequency signals to be received.

In some embodiments, each of the one or more receive paths is further configured to turn on and turn off based on the corresponding discontinuous receive state.

In some embodiments, the radio unit further comprises: a data jitter buffer configured to receive the control plane data from the input and to provide the control plane data to each of the one or more receive paths and the uplink allocation map component.

In some embodiments, the data jitter buffer is further configured to provide the control plane data at a substantially fixed rate.

In some embodiments, each of the one or more receive paths comprises a low noise amplifier coupled to a corresponding one of the one or more antennas, and the uplink allocation map component is further configured to provide the discontinuous receive states to the one or more low noise amplifiers.

In some embodiments, the input is further configured to receive the packets from a distributed unit via Ethernet.

Another aspect is a method of setting a discontinuous receive state within a radio unit, comprising: receiving a plurality of packets at an input of the radio unit, at least one of the packets including control plane data; receiving, at one or more receive paths, one or more radio frequency signals from one or more antennas; and determining a discontinuous receive state for each of the one or more receive paths based on the control plane data. The method further comprises: setting the discontinuous receive state in one of: a first discontinuous receive state in which the corresponding receive path is to be turned off in response to absence of the control plane data; and a second discontinuous receive state in which the corresponding receive path is to be turned on in response to the control plane data indicating that there are radio frequency signals to be received.

In some embodiments, the method further comprises: turning on and turning off each of the one or more receive paths based on the corresponding discontinuous receive state.

In some embodiments, the method further comprises: receiving the control plane data at a data jitter buffer from the input; and providing the control plane data from the data jitter buffer to each of the one or more receive paths.

In some embodiments, the method further comprises: providing the control plane data from the data jitter buffer at a substantially fixed rate.

In some embodiments, the method further comprises: providing the discontinuous receive states to one or more low noise amplifiers coupled to the one or more antennas.

In some embodiments, the receiving of the plurality of packets includes receiving the packets from a distributed unit via Ethernet.

Yet another aspect is an open radio access network (O-RAN), comprising: a distributed unit configured to output a plurality of packets, at least one of the packets including control plane data; one or more antennas configured to receive radio frequency (RF) signals; and a radio unit configured to receive the packets from the distributed unit and to receive the RF signals from the one or more antennas based on the control plane data; wherein the radio unit comprises: an input configured to receive the packets from the distributed unit; one or more receive paths configured to receive the RF signals from the one or more antennas; and an uplink allocation map component configured to receive the control plane data and determine a discontinuous receive state for each of the one or more receive paths based on the control plane data.

In some embodiments, each of the one or more receive paths is further configured to turn on and turn off based on the corresponding discontinuous receive state.

In some embodiments, the radio unit further comprises: a data jitter buffer configured to receive the control plane data from the input and to provide the control plane data to each of the one or more receive paths and the uplink allocation map component.

In some embodiments, the data jitter buffer is further configured to provide the control plane data at a substantially fixed rate.

In some embodiments, the uplink allocation map component is further configured to set the discontinuous receive state in one of a first discontinuous receive state in which the corresponding receive path is to be turned off in response to absence of the control plane data or a second discontinuous receive state in which the corresponding receive path is to be turned on in response to the control plane data indicating that there are radio frequency signals to be received.

In some embodiments, each of the one or more receive paths comprises a low noise amplifier coupled to a corresponding one of the one or more antennas, and the uplink allocation map component is further configured to provide the discontinuous receive states to the one or more low noise amplifiers.

### BRIEF DESCRIPTION OF THE DRAWINGS

These drawings and the associated description herein are provided to illustrate specific embodiments of the invention and are not intended to be limiting.
**FIG. 1A** illustrates an example wireless telecommunication system.
**FIG. 1B** illustrates an example of a RAN.
**FIG. 2** illustrates an example of an O-RAN which can be used as part of a telecommunication system.
**FIG. 3** provides an illustration of the communications between a distributed unit and a radio unit when transmitting radio frequency signals using an O-RAN system.
**FIG. 4A** illustrates one example embodiment of a radio unit in accordance with aspects of this disclosure.
**FIG. 4B** illustrates one example embodiment of the connections between components of the radio unit in accordance with aspects of this disclosure.
**FIG. 5** illustrates a method for deriving a discontinuous receive state in accordance with aspects of this disclosure.

### DETAILED DESCRIPTION

Various aspects of the novel systems, apparatuses, and methods are described more fully hereinafter with reference to the accompanying drawings. Aspects of this disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the novel systems, apparatuses, and methods disclosed herein, whether implemented independently of or combined with any other aspect. For example, an apparatus may be implemented or a method may be practiced using any number of the aspects set forth herein. In addition, the scope is intended to encompass such an apparatus or method which is practiced using other structure, functionality, or structure and functionality in addition to or other than the various aspects set forth herein.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wired and wireless technologies, system configurations, networks, including optical networks, hard disks, and transmission protocols, some of which are illustrated by way of example in the figures and in the following description of the preferred aspects. The detailed description and drawings are merely illustrative of the disclosure rather than limiting, the scope of the disclosure being defined by the appended claims.

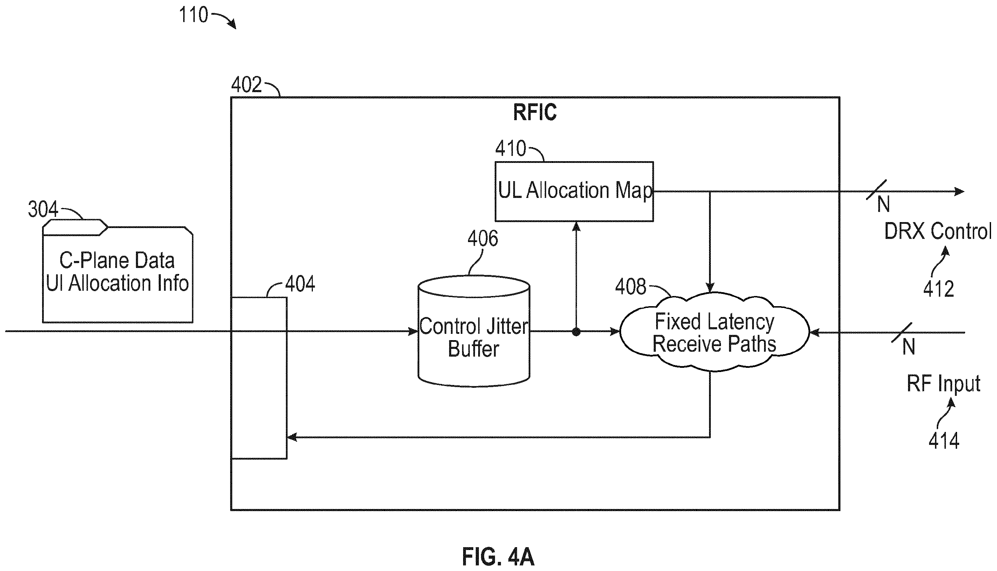

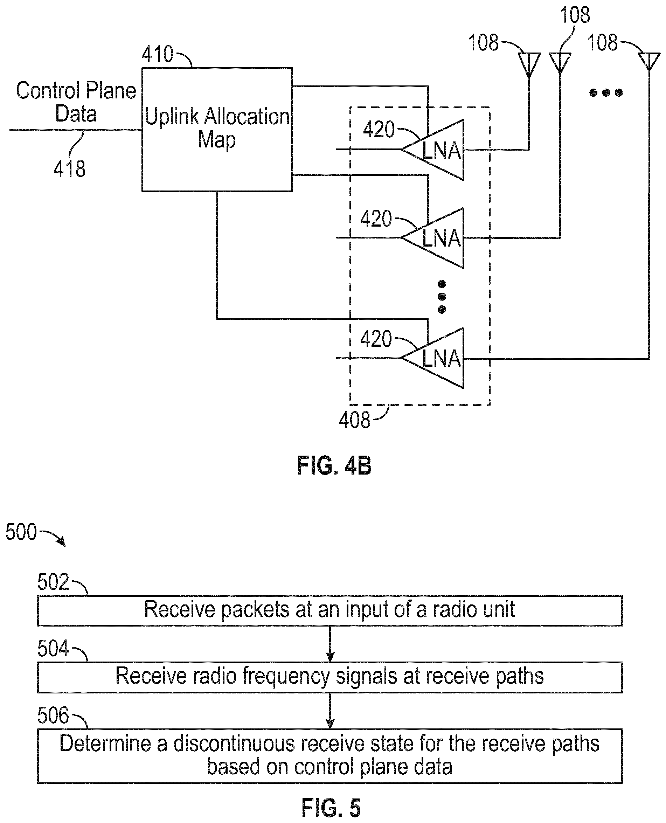

In this description, reference is made to the drawings where like reference numerals can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The claimed invention corresponds to fig. 4a, 4b, 5 and to the related text in the description. The remaining figures and the text of the description are intended to better explain the invention.

### Introduction to Radio Access Network (RAN)

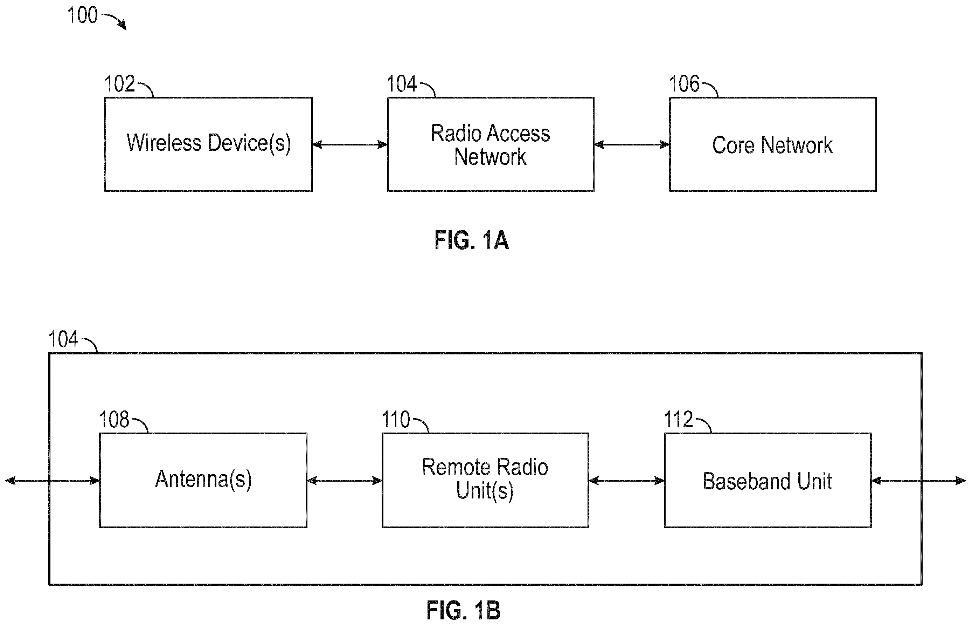

**FIG. 1A** illustrates an example wireless telecommunication system 100. The wireless telecommunication system 100 includes one or more wireless device(s) 102, a radio access network (RAN) 104, and a core network (CN) 106. As used herein, a RAN 104 generally refers to a network used as a part of the wireless telecommunication system 100. The RAN 104 can be used to connect the one or more wireless device(s) 102, such as mobile phones, to the CN 106 of the telecommunication system 100.

**FIG. 1B** illustrates an example of a RAN 104. In some embodiments, the RAN 104 can include a baseband unit (BBU) 112 that is connected to one or more remote radio units (RRUs) 110 positioned near one or more antenna(s) 108. The BBU 112 can be configured to communicate with the CN 106, while the antenna(s) 108 can be configured to communicate with the wireless device(s) 102.

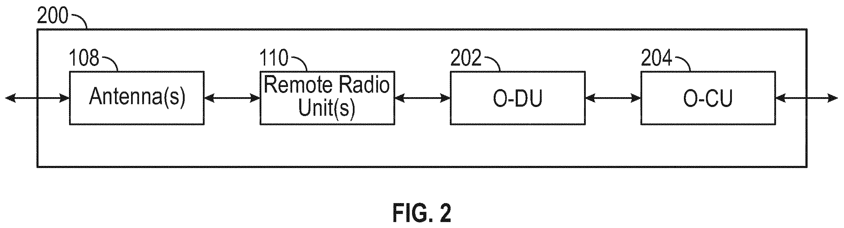

**FIG. 2** illustrates an example of an O-RAN 200 which can be used as part of a telecommunication system. As used herein, O-RAN 200 generally refers to a type of RAN that, among other things, can employ Ethernet for communications between components of the O-RAN 200. In some embodiments, the BBU from a RAN can be replaced with two components in the O-RAN 200, a distributed unit (DU, also referred to as O-DU) 202 and a central unit (CU, also referred to as O-CU) 204. In some embodiments, the distributed unit 202 and the central unit 204 can be connected and communicate via Ethernet.

The O-RAN 200 can communication distinct control plane (CP) and user plane (UP) information with the radio unit (RU, also referred to as O-RU) 110 to be transmitted or received using radio frequency (RF) signals. The control plane can be used to communicate the presence or the absence of downlink data scheduling. The user plane can provide the data to be transmitted. As described herein, the radio unit 110 can include RF circuitry configured to amplify and/or convert the user plane data into RF signals that can be transmitted by the one or more antenna(s) 108. In some embodiments, the RF circuity can include, for example: a fast Fourier transform (FFT) block, a digital-to-analog converter (DAC), a mixer, a variable gain amplifier, a phase shifter, a power amplifier, etc. The transmit paths may use relatively large amounts of power to amplify the RF signals to powers sufficient for the distances used for wireless RF communications, and thus, turning off transmit paths when they are not currently being used for RF communications can reduce power consumption of the O-RAN 200.

The use of Ethernet within the O-RAN 200 can introduce certain challenges. For example, since Ethernet is a packet-based communication standard, it is possible for individual packets to be lost. This can lead to undesirable functionality of the system when a component, such as the radio unit 110, does not receive the expected lost data packets.

The O-RAN 200 can also employ discontinuous transmit (DTX) to reduce power consumption when radio frequency signals are not being transmitted by a given antenna 108 or channel of the radio unit 110. The O-RAN 200 can also employ discontinuous receive (DRX) to protect sensitive components when radio frequency signals are not being received by a given antenna 108 or channel of the radio unit 110.

### Discontinuous Receive Signaling in O-RAN

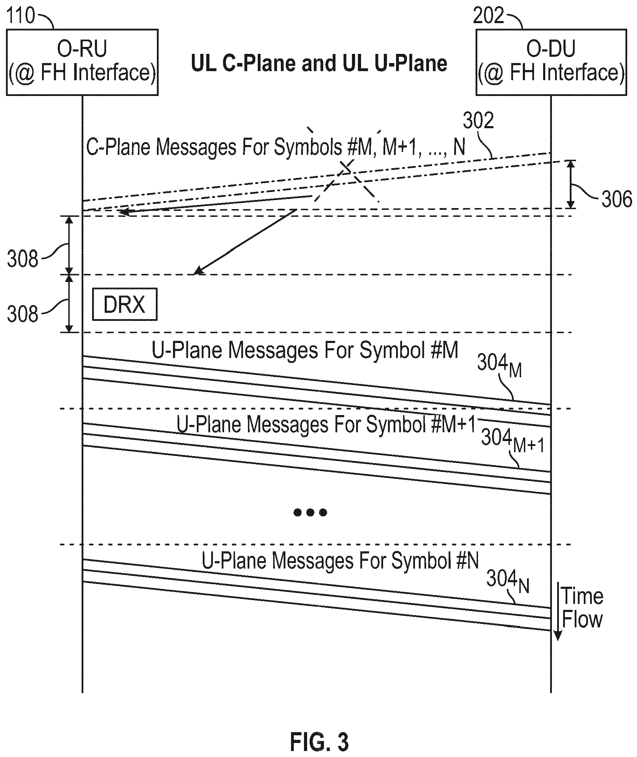

**FIG. 3** provides an illustration of the communications between a distributed unit 202 and a radio unit 110 when receiving radio frequency signals using an O-RAN 200 system. The distributed unit 202 can provide a discontinuous receive signal, or discontinuous receive signal, which can be used by the radio unit 110 to turn off certain components of the RF circuitry for a corresponding channel or transmit path of the radio unit 110 at times when there is no data (e.g., data in the user plane) to be wirelessly received.

The state of the discontinuous receive signal can be determined or derived directly from control information such as a pre-determined schedule (for instance, a time division duplexing or TDD transmit/receive schedule) or real time control information. In the context of O-RAN, the Ethernet based network can provide the control plane and user plane information to radio units 110, for example, via the distributed unit202. The control plane can be used to signal or indicate the absence or presence of uplink data scheduling to follow in the user plane. The user plane can provide the actual data being received.

However, relying on a control or a pre-determined schedule to drive discontinuous receive signaling may be less accurate and can introduce a risk of damaging equipment or components in the receive path since the receiver circuitry may remain active in the absence of control information directing the receiver circuity to turn off. For example, when using direct real-time control for closely placed radio units 110, a packet instructing the receiver circuitry of a particular radio unit 110 to turn off can be lost, resulting in the receiver circuitry erroneously remaining on while nearby high power transmitters from other radio units 110 are transmitting.

Accordingly, the lack of control information is especially relevant in packet-based networks, such as Ethernet, where control packets may be dropped. This can result in the radio unit 110 being instructed to maintain an active receive path due to the packets containing the control plane information with instructions to turn the receive path off being lost. The receive paths may use relatively sensitive components (e.g., a low noise amplifier (LNA)) designed to receive relatively weak signals with low signal-to-noise ratios. If the receive path remains active while a transmit path in the same radio unit 110 or another radio unit 110 begins transmitting radio frequency signals, the receive path may receive signals having a much greater strength than the receive path is designed to handle, which can result in damage to component(s) on the receive path and/or receiver desense.

**FIG. 3** illustrates one example situation in which packet loss may result in one or more receive paths remaining on when a packet containing control plane data is lost. In particular, the distributed unit 202 can provide control plane messages 302 to the radio unit 110 to instruct one or more receive paths of the radio unit 110 to turn off. In certain situations, the distributed unit 202 may be lost as illustrated in **FIG. 3****.** Since in the situation illustrated in **FIG. 3****,** the radio unit 110 did not receive the control plane message 302, the radio unit 110 may maintain the one or more receive paths on in a receive state, which may make the receive paths vulnerable to damage as discussed above.

There are different techniques for deriving discontinuous receive control. In one embodiment, the O-RAN standard provides a standards optional method of relying on control information for explicit notification of discontinuous receive periods. However, this is not autonomous and may be vulnerable to packet disruption on the fronthaul network the radio unit 110 is linked to.

Aspects of this disclosure relate to systems and techniques for determining or deriving the discontinuous receive state directly from the absence of control plane data. By deriving the discontinuous receive state directly from the absence of control plane data, in circumstances such as congestion in the Ethernet based network that may cause control plane data outages, the radio unit 110 can assert the discontinuous receive state to prevent damage or inoperability to one or more receive paths. In contrast, in implementations in which the discontinuous receive state is derived from a pre-determined schedule or from control plane information, the radio unit 110 may have maintained an active receive state even when no control plane data is received by the radio unit 110 due to packet loss.

**FIG. 4A** illustrates a radio unit 110 in accordance with with the claimed invention. **FIG. 4B** illustrates the connections between components of the radio unit 110. With reference to **FIGs. 4A** and **4B****,** the radio unit 110 includes a radio head 402 (also referred to as a radio frequency integrated circuit (RFIC)). The radio head 402 includes an input/output 404 (e.g., an Ethernet port), a data jitter buffer 406, a plurality of receive paths 408, an uplink allocation map component 410, one or more discontinuous receive control outputs 412, and one or more RF inputs 414. The input/output 404 is configured to receive packets 304 containing control plane data 418. The control plane data 418 can include uplink allocation data.

The data jitter buffer 406 is configured to buffer the control plane data 418 to prevent jitter introduced, for example, by Ethernet communication from affecting the components downstream from the data jitter buffer 406. The data jitter buffer 406 can provide the buffered control plane data 418 to the receive paths 408 and the uplink allocation map component 410 at a rate expected by the receive paths 408. In some embodiments, the data jitter buffer 406 may provide the control plane data 418 to the receive paths 408 and the uplink allocation map component 410 at a substantially fixed rate.

Each of the receive paths 408 is configured to receive the control plane data 418 from the data jitter buffer 406 and amplify/convert RF signals received from one or more antenna(s) 108 based on the control plane data. In some embodiments, each of the receive paths 408 can include: a low noise amplifier 420, a filter, a mixer, an analog-to-digital converter (ADC), a FFT block, etc. These components can be configured to convert the received RF signals into IQ samples that can be transmitted to the distributed unit over Ethernet. In some embodiments, each of the receive paths 408 may have a fixed latency between receiving RF signals from the antenna(s) and outputting the IQ samples to the input/output 404. In some embodiments, each of the receive paths 408 can be coupled to a corresponding one of the antennas 108 via a physical antenna path.

The uplink allocation map component 410 is configured to determine or derive the discontinuous receive state in response to determining or identifying the absence of control plane data 418 received from the data jitter buffer 406. For example, the uplink allocation map component 410 can derive a first discontinuous receive state in which the corresponding receive paths 408 are to be turned off in the absence of the control plane containing data. Similarly, the uplink allocation map component 410 can derive a second discontinuous receive state in which the corresponding receive paths 408 are to be turned on in response to the control plane data 418 containing uplink allocation data indicating that there are RF signals to be received. The uplink allocation map component 410 can also derive the first discontinuous receive state in response to the control plane data 418 containing uplink allocation data indicating that there are no RF signals to be received. The uplink allocation map component 410 can then generate a plurality of discontinuous receive control signals that indicate the derived discontinuous receive states. Each of the discontinuous receive signals may correspond to one of the RF inputs that provide RF signals to the receive paths 408. The uplink allocation map component 410 can also provide the discontinuous receive control signals to the low noise amplifiers 420 in each of the corresponding receive paths 408 such that the receive paths 408 can be turned off when there are no RF signals to be received and in the absence of control plane data 418.

Depending on the embodiment, the uplink allocation map component 410 can be implemented in hardware (e.g., using discrete circuity) and/or in software running on a processor or other circuit (e.g., a digital signal processor (DSP), an application specific integrated circuit (ASIC), a field programmable gate array (FPGA) or other programmable logic device).

By extracting the time for the start and the end of uplink RF allocations from the control plane data, the uplink allocation map component 410 can determine or derive the discontinuous receive state independently for each physical antenna path/receive path 408. The uplink allocation map component 410 can assert the discontinuous receive state (e.g., the first discontinuous receive state) in any time period for which no active allocation has been registered from the control plane data. The radio unit 402 can output the discontinuous receive state control signals per antenna path via the one or more discontinuous receive control outputs 412 with a configurable delay to match miscellaneous RF circuitry requirements.

**FIG. 5** illustrates a method 500 for determining or deriving a discontinuous receive state in accordance with the claimed invention. One or more blocks of the method 500 is implemented, for example, by a radio unit (e.g., the radio unit 110 of **FIG. 4****)** and/or an O-RAN (e.g., the O-RAN 200 of **FIG. 2****).**

At block 502, an input of a radio unit can receive a plurality of packets. At least one of the packets can include control plane data. In some embodiments, the input can include an Ethernet port configured to receive the packets.

At block 504, one or more receive paths receive one or more radio frequency signals from one or more antennas. The receive paths can include one or more low noise amplifiers configured to amplify the RF receive signals to a power level sufficient for communication over Ethernet to the distributed unit. At block 506, an uplink allocation map component receives the control plane data and determines a discontinuous receive state for each of the one or more receive paths based on the control plane data. In the claimed invention, each of the one or more receive paths are turned on and turned off based on the corresponding discontinuous receive state determined by the uplink allocation map component.

In the foregoing, it will be appreciated that any feature of any one of the embodiments can be combined or substituted with any other feature of any other one of the embodiments.

Aspects of this disclosure can be implemented in various electronic devices. Examples of the electronic devices can include, but are not limited to, consumer electronic products, parts of the consumer electronic products, electronic test equipment, cellular communications infrastructure such as a base station, etc. Examples of the electronic devices can include, but are not limited to, a mobile phone such as a smart phone, a wearable computing device such as a smart watch or an ear piece, a telephone, a television, a computer monitor, a computer, a modem, a hand-held computer, a laptop computer, a tablet computer, a personal digital assistant (PDA), a microwave, a refrigerator, a vehicular electronics system such as an automotive electronics system, a stereo system, a DVD player, a CD player, a digital music player such as an MP3 player, a radio, a camcorder, a camera such as a digital camera, a portable memory chip, a washer, a dryer, a washer/dryer, peripheral device, a clock, etc. Further, the electronic devices can include unfinished products.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled," as generally used herein, refers to two or more elements that may be either directly connected, or connected by way of one or more intermediate elements. Likewise, the word "connected," as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

## Claims

1. A radio unit (110) for radio frequency communications, comprising:
an input (404) configured to receive a plurality of packets, at least one of the packets including control plane data (418);
one or more receive paths (408) configured to receive one or more radio frequency signals from one or more corresponding antennas; and
an uplink allocation map component (410) configured to receive the control plane data and determine a discontinuous receive state for each of the one or more receive paths based on the control plane data, the uplink allocation map component being **characterized in that** it is configured to set the discontinuous receive state in one of a first discontinuous receive state in which the corresponding receive path is to be turned off in response to absence of the control plane data or a second discontinuous receive state in which the corresponding receive path is to be turned on in response to the control plane data indicating that there are radio frequency signals to be received.

2. The radio unit (110) of Claim 1, wherein each of the one or more receive paths (408) is further configured to turn on and turn off based on the corresponding discontinuous receive state.

3. The radio unit (110) of Claim 1 or 2, further comprising:
a data jitter buffer (406) configured to receive the control plane data from the input (404) and to provide the control plane data (418) to each of the one or more receive paths and the uplink allocation map component (410).

4. The radio unit (110) of Claim 3, wherein the data jitter buffer (406) is further configured to provide the control plane data (418) at a substantially fixed rate.

5. The radio unit (110) of any preceding Claim, wherein:
each of the one or more receive paths (408) comprises a low noise amplifier coupled to a corresponding one of the one or more antennas (108), and
the uplink allocation map component (410) is further configured to provide the discontinuous receive states to the one or more low noise amplifiers.

6. The radio unit (110) of any preceding Claim, wherein the input (404) is further configured to receive the packets from a distributed unit via Ethernet.

7. A method (500) of setting a discontinuous receive state within a radio unit, comprising:
receiving (502) a plurality of packets at an input of the radio unit, at least one of the packets including control plane data;
receiving (504), at one or more receive paths, one or more radio frequency signals from one or more corresponding antennas;
determining (506) a discontinuous receive state for each of the one or more receive paths based on the control plane data; and
**characterized in** setting the discontinuous receive state in one of:
a first discontinuous receive state in which the corresponding receive path is to be turned off in response to absence of the control plane data; and
a second discontinuous receive state in which the corresponding receive path is to be turned on in response to the control plane data indicating that there are radio frequency signals to be received.

8. The method (500) of Claim 7, further comprising:
turning on and turning off each of the one or more receive paths based on the corresponding discontinuous receive state.

9. The method (500) of Claim 7 or 8, further comprising:
receiving the control plane data at a data jitter buffer from the input; and
providing the control plane data from the data jitter buffer to each of the one or more receive paths.

10. The method (500) of Claim 9, further comprising:
providing the control plane data from the data jitter buffer at a substantially fixed rate.

11. The method (500) of any of Claims 7 to 10, further comprising:
providing the discontinuous receive states to one or more low noise amplifiers coupled to the one or more antennas.

12. The method (500) of any of Claims 7 to 11, wherein the receiving of the plurality of packets includes receiving the packets from a distributed unit via Ethernet.

13. An open radio access network, O-RAN (200), comprising:
a distributed unit (202) configured to output a plurality of packets, at least one of the packets including control plane data (418);
one or more antennas (108) configured to receive radio frequency, RF, signals; and
a radio unit (110) in accordance with any of Claims 1 to 6, configured to receive the packets from the distributed unit and to receive the RF signals from the one or more antennas based on the control plane data.

## Patentansprüche

1. Funkeinheit (110) für Hochfrequenzkommunikation, umfassend:
einen Eingang (404), der so konfiguriert ist, dass er eine Vielzahl von Paketen empfängt, wobei mindestens eines der Pakete Daten der Steuerebene (418) einschließt;
einen oder mehrere Empfangspfade (408), die so konfiguriert sind, dass sie ein oder mehrere Hochfrequenzsignale von einer oder mehreren entsprechenden Antennen empfangen; und
eine Uplink-Zuweisungskartenkomponente (410), die so konfiguriert ist, dass sie die Daten der Steuerebene empfängt und einen diskontinuierlichen Empfangszustand für jeden des einen oder der mehreren Empfangspfade basierend auf den Daten der Steuerebene bestimmt, wobei die Uplink-Zuweisungskartenkomponente **dadurch gekennzeichnet ist, dass** sie
so konfiguriert ist, dass sie den diskontinuierlichen Empfangszustand auf einen eines ersten diskontinuierlichen Empfangszustands einstellt, in dem der entsprechende Empfangspfad als Reaktion auf Fehlen von Daten der Steuerebene abgeschaltet werden soll, oder eines zweiten diskontinuierlichen Empfangszustands, in dem der entsprechende Empfangspfad als Reaktion darauf, dass die Daten der Steuerebene angeben, dass Hochfrequenzsignale empfangen werden sollen, eingeschaltet werden soll.

2. Funkeinheit (110) nach Anspruch 1, wobei jeder des einen oder der mehreren Empfangspfade (408) weiter so konfiguriert ist, dass er basierend auf dem entsprechenden diskontinuierlichen Empfangszustand ein- und ausgeschaltet wird.

3. Funkeinheit (110) nach Anspruch 1 oder 2, weiter umfassend:
einen Daten-Jitter-Puffer (406), der so konfiguriert ist, dass er die Daten der Steuerebene vom Eingang (404) empfängt und die Daten der Steuerebene (418) jedem des einen oder der mehreren Empfangspfade und der Uplink-Zuweisungskartenkomponente (410) bereitstellt.

4. Funkeinheit (110) nach Anspruch 3, wobei der Daten-Jitter-Puffer (406) weiter so konfiguriert ist, dass er die Daten der Steuerebene (418) bei einer im Wesentlichen fixen Geschwindigkeit bereitstellt.

5. Funkeinheit (110) nach einem vorstehenden Anspruch, wobei:
jeder des einen oder der mehreren Empfangspfade (408) einen rauscharmen Verstärker umfasst, der mit einer entsprechenden der einen oder der mehreren Antennen (108) gekoppelt ist, und
die Uplink-Zuweisungskartenkomponente (410) weiter so konfiguriert ist, dass sie die diskontinuierlichen Empfangszustände an einen oder die mehreren Rauscharmverstärker bereitstellt.

6. Funkeinheit (110) nach einem vorstehenden Anspruch, wobei der Eingang (404) weiter so konfiguriert ist, dass er die Pakete von einer verteilten Einheit über Ethernet empfängt.

7. Verfahren (500) zum Einstellen eines diskontinuierlichen Empfangszustands innerhalb einer Funkeinheit, umfassend:
Empfangen (502) einer Vielzahl von Paketen an einem Eingang der Funkeinheit, wobei mindestens eines der Pakete Daten der Steuerebene einschließt;
Empfangen (504) an einem oder mehreren Empfangspfaden von einem oder mehreren Hochfrequenzsignalen von einer oder mehreren entsprechenden Antennen;
Bestimmen (506) eines diskontinuierlichen Empfangszustands für jeden des einen oder der mehreren Empfangspfade basierend auf den Daten der Steuerebene; und
**gekennzeichnet durch** Einstellen des diskontinuierlichen Empfangszustands auf einen von
einem ersten diskontinuierlichen Empfangszustand, in dem der entsprechende Empfangspfad als Reaktion auf Fehlen der Daten der Steuerebene ausgeschaltet werden soll; und
einen zweiten diskontinuierlichen Empfangszustand, in dem der entsprechende Empfangspfad als Reaktion darauf, dass die Daten der Steuerebene angeben, dass Hochfrequenzsignale empfangen werden sollen, eingeschaltet wird.

8. Verfahren (500) nach Anspruch 7, weiter umfassend:
Einschalten und Ausschalten von jedem des einen oder der mehreren Empfangspfade basierend auf dem entsprechenden diskontinuierlichen Empfangszustand.

9. Verfahren (500) nach Anspruch 7 oder 8, weiter umfassend:
Empfangen der Daten der Steuerebene von dem Eingang an einem Daten-Jitter-Puffer; und
Bereitstellen der Daten der Steuerebene von dem Daten-Jitter-Puffer für jeden des einen oder der mehreren Empfangspfade.

10. Verfahren (500) nach Anspruch 9, weiter umfassend:
Bereitstellen der Daten der Steuerebene von dem Daten-Jitter-Puffer bei einer im Wesentlichen fixen Geschwindigkeit.

11. Verfahren (500) nach einem der Ansprüche 7 bis 10, weiter umfassend:
Bereitstellen der diskontinuierlichen Empfangszustände für einen oder mehrere Rauscharmverstärker, die mit der einen oder den mehreren Antennen gekoppelt sind.

12. Verfahren (500) nach einem der Ansprüche 7 bis 11, wobei das Empfangen der Vielzahl von Paketen Empfangen der Pakete von einer verteilten Einheit über Ethernet einschließt.

13. Offenes Funkzugangsnetzwerk, O-RAN (200), umfassend:
eine verteilte Einheit (202), die so konfiguriert ist, dass sie eine Vielzahl von Paketen ausgibt, wobei mindestens eines der Pakete Daten der Steuerebene (418) einschließt;
eine oder mehrere Antennen (108), die so konfiguriert sind, dass sie Hochfrequenz-, RF-, Signale empfangen; und
eine Funkeinheit (110) nach einem der Ansprüche 1 bis 6, die so konfiguriert ist, dass sie die Pakete von der verteilten Einheit empfängt und die RF-Signale von der einen oder den mehreren Antennen basierend auf den Daten der Steuerebene empfängt.

## Revendications

1. Unité radio (110) pour des communications radiofréquence, comprenant :
une entrée (404) configurée pour recevoir une pluralité de paquets, au moins un des paquets incluant des données de plan de commande (418) ;
un ou plusieurs trajets de réception (408) configurés pour recevoir un ou plusieurs signaux de radiofréquence en provenance d'une ou de plusieurs antennes correspondantes ; et
une composante de carte d'attribution de liaison montante (410) configurée pour recevoir les données de plan de commande et déterminer un état de réception discontinu pour chacun du un ou des plusieurs trajets de réception sur la base des données de plan de commande, la composante de carte d'attribution de liaison montante étant **caractérisée en ce qu'**elle est
configurée pour définir l'état de réception discontinu dans un d'un premier état de réception discontinu dans lequel le trajet de réception correspondant doit être désactivé en réponse à une absence des données de plan de commande ou d'un second état de réception discontinu dans lequel le trajet de réception correspondant doit être activé en réponse au fait que les données de plan de commande indiquent qu'il y a des signaux de radiofréquence à recevoir.

2. Unité radio (110) selon la revendication 1, dans laquelle chacun du un ou des plusieurs trajets de réception (408) est en outre configuré pour s'activer et se désactiver sur la base de l'état de réception discontinu correspondant.

3. Unité radio (110) selon la revendication 1 ou 2, comprenant en outre :
un tampon de gigue de données (406) configuré pour recevoir les données de plan de commande en provenance de l'entrée (404) et pour fournir les données de plan de commande (418) à chacun du un ou des plusieurs trajets de réception et à la composante de carte d'attribution de liaison montante (410).

4. Unité radio (110) selon la revendication 3, dans laquelle le tampon de gigue de données (406) est en outre configuré pour fournir les données de plan de commande (418) à un débit substantiellement fixe.

5. Unité radio (110) selon une quelconque revendication précédente, dans laquelle :
chacun du un ou des plusieurs trajets de réception (408) comprend un amplificateur à faible bruit couplé à une correspondante de la une ou des plusieurs antennes (108), et
la composante de carte d'attribution de liaison montante (410) est en outre configurée pour fournir les états de réception discontinus au un ou aux plusieurs amplificateurs à faible bruit.

6. Unité radio (110) selon une quelconque revendication précédente, dans laquelle l'entrée (404) est en outre configurée pour recevoir les paquets en provenance d'une unité distribuée par l'intermédiaire d'Ethernet.

7. Procédé (500) de définition d'un état de réception discontinu à l'intérieur d'une unité radio, comprenant :
la réception (502) d'une pluralité de paquets au niveau d'une entrée de l'unité radio, au moins un des paquets incluant des données de plan de commande ;
la réception (504), au niveau d'un ou de plusieurs trajets de réception, d'un ou de plusieurs signaux de radiofréquence en provenance d'une ou de plusieurs antennes correspondantes ;
la détermination (506) d'un état de réception discontinu pour chacun du un ou des plusieurs trajets de réception sur la base des données de plan de commande ; et
**caractérisé par** la définition de l'état de réception discontinu dans un
d'un premier état de réception discontinu dans lequel le trajet de réception correspondant doit être désactivé en réponse à une absence des données de plan de commande ; et
d'un second état de réception discontinu dans lequel le trajet de réception correspondant doit être activé en réponse au fait que les données de plan de commande indiquent qu'il y a des signaux de radiofréquence à recevoir.

8. Procédé (500) selon la revendication 7, comprenant en outre :
l'activation et la désactivation de chacun du un ou des plusieurs trajets de réception sur la base de l'état de réception discontinu correspondant.

9. Procédé (500) selon la revendication 7 ou 8, comprenant en outre :
la réception des données de plan de commande au niveau d'un tampon de gigue de données en provenance de l'entrée ; et
la fourniture des données de plan de commande en provenance du tampon de gigue de données à chacun du un ou des plusieurs trajets de réception.

10. Procédé (500) selon la revendication 9, comprenant en outre :
la fourniture des données de plan de commande en provenance du tampon de gigue de données à un débit substantiellement fixe.

11. Procédé (500) selon l'une quelconque des revendications 7 à 10, comprenant en outre :
la fourniture des états de réception discontinus à un ou plusieurs amplificateurs à faible bruit couplés à la une ou aux plusieurs antennes.

12. Procédé (500) selon l'une quelconque des revendications 7 à 11, dans lequel la réception de la pluralité de paquets inclut la réception des paquets en provenance d'une unité distribuée par l'intermédiaire d'Ethernet.

13. Réseau d'accès radio ouvert, O-RAN (200), comprenant :
une unité distribuée (202) configurée pour produire en sortie une pluralité de paquets, au moins un des paquets incluant des données de plan de commande (418) ;
une ou plusieurs antennes (108) configurées pour recevoir des signaux de radiofréquence, RF ; et
une unité radio (110) selon l'une quelconque des revendications 1 à 6, configurée pour recevoir les paquets en provenance de l'unité distribuée et pour recevoir les signaux RF en provenance de la une ou des plusieurs antennes sur la base des données de plan de commande.
